# EUROPEAN PATENT APPLICATION

(11) **EP 4 838 658 A1**
(43) Date of publication of application: **11.11.2026**
(21) Application number: 24932758.6
(22) Date of filing: 09.08.2024
(51) Int. Cl.: H01M 50/244, H01M 50/209, H01M 50/264

(54) **BATTERY AND ELECTRIC DEVICE**

(30) Priority: 29.03.2024 CN 202420646432 U
(71) Applicant: Contemporary Amperex Technology Co., Limited, Ningde, Fujian 352100 (CN)
(72) Inventor: LIAO, Boxiang, Ningde, Fujian 352100 (CN); QIN, Feng, Ningde, Fujian 352100 (CN)
(74) Representative: Ziebig Hengelhaupt Intellectual Property Attorneys Patentanwaltskanzlei PartGmbB
(86) International application number: PCT/CN2024/111025
(87) International publication number: WO 2025/200226

(57) **Abstract**

A battery (100) and an electric device. The battery (100) comprises a case (10) and battery cells (20). The case (10) comprises: a case body (13); at least two limiting beams (14), wherein the at least two limiting beams (14) and the case body (13) define an accommodating space (16), the limiting beams (14) each comprise a first beam side surface (141) and a second beam side surface (142), the second beam side surface (142) is configured to be a vertical plane for abutting against the largest surfaces of the battery cells (20), and the second beam side surface (142) and at least part of the first beam side surface (141) are arranged at an included angle; and fixing members (15) connected between the limiting beams (14) in a first direction. The battery cells (20) in the accommodating space (16) are constrained by means of the limiting beams (14), the first beam side surfaces (141) abut against the largest surfaces of the battery cells (20), and at least parts of the first beam side surfaces (141) are inclined toward the second beam side surfaces (142), such that the limiting beams (14) provide stable support to constrain expansion on the battery cells (20); and in addition, the fixing members (15) can limit the limiting beams (14) in the first direction, thereby reducing the probability of tilting of the limiting beams (14) under the expansion deformation of the battery cells (20), and further improving the expansion constraint force on the battery cells (20).

## Description

### RELATED APPLICATION

The present application claims priority to Chinese Patent Application No. 2024206464329, filed on March 29, 2024 and entitled "BATTERY AND ELECTRIC DEVICE", which is incorporated herein by reference in its entirety.

### TECHNICAL FIELD

The present application relates to the technical field of batteries, and in particular, to a battery and an electric device.

### BACKGROUND

A battery cell is the smallest unit forming a battery. During cycling, the electrochemical reaction occurs inside the battery cell, causing the battery cell to expand. As the battery cell continuously expands, the overall performance of the battery will be affected.

Therefore, when the battery cell is provided inside the case, it is necessary to provide a certain support structure to constrain the expansion of the battery cell. However, the current support structure exhibits a relatively poor anti-expansion effect and cannot provide sufficient support and constraint for the expansion of the battery cell.

### SUMMARY

Based on this, it is necessary to provide a battery and an electric device for solving the problem that the current support structure exhibits a relatively poor anti-expansion effect and cannot provide sufficient support and constraint for the expansion of the battery cell.

In a first aspect, the present application provides a battery. The battery includes a battery cell and a case. The case includes a case body, at least two limiting beams, and a fixing member. The limiting beams are disposed in the case body and spaced apart from each other in a first direction, and two adjacent limiting beams and the case body define, in an enclosing manner, an accommodating space for accommodating a battery cell. At least one of the limiting beams includes a first beam side surface and a second beam side surface disposed opposite to each other in the first direction, the second beam side surface is configured as a vertical plane for abutting against a large surface of the battery cell, the large surface is a surface with a largest surface area in the battery cell, and at least part of the first beam side surface is disposed obliquely toward the second beam side surface. The fixing member extends in the first direction and is connected between the two adjacent limiting beams, and is configured to limit the two adjacent limiting beams in the first direction.

Through the above structure, the limiting beam can constrain the battery cell in the accommodating space. The first beam side surface of the limiting beam can abut against the large surface of the battery cell, and an included angle is formed between the second beam side surface and at least part of the first beam side surface, such that the limiting beam can more stably support and constrain the expansion on the large surface of the battery cell. In addition, the fixing member can limit each limiting beam in the first direction, thereby reducing the probability of the limiting beam tipping over under the action of expansion and deformation of the battery cell, and further improving the expansion constraining force on the battery cell.

In some embodiments, the fixing member is provided with a connecting surface, and the connecting surface is disposed facing the accommodating space and configured to be connected to the battery cell in the accommodating space.

The fixing member is connected to the battery cell in the accommodating space by means of the connecting surface, which can further enhance the constraining force of the fixing member on the battery cell.

In some embodiments, the case further includes a connecting member, and the connecting member is disposed between the connecting surface and a top cover of the battery cell and configured to connect the fixing member and the battery cell.

By providing the connecting member, the connecting surface can be quickly and stably connected to the top cover of the battery cell, thereby further enhancing the constraining force of the fixing member on the battery cell.

In some embodiments, the connecting member includes an adhesive.

In some embodiments, the fixing member is detachably connected to the limiting beam. Therefore, the fixing member and each limiting beam can be more flexibly disassembled and assembled, which facilitates the operation.

In some embodiments, the case further includes a support beam, and the support beam is connected between the first beam side surface and an inner wall of the case body in the first direction.

Therefore, by means of the support beam, the second beam side surface of the limiting beam can better abut against the large surface of the battery cell and provide a stable supporting force for the battery cell. In addition, the expansion force on the battery cell can also be smoothly transmitted to the case body by means of the support beam, thereby providing a better anti-expansion effect.

In some embodiments, the limiting beam extends in a second direction, and the first direction intersects with the second direction.

The case includes a plurality of support beams, and the plurality of support beams are spaced apart from each other in the second direction and separately connected between the first beam side surface and the inner wall of the case body in the first direction.

Through the above structure, the support beam can be better supported between the limiting beam and the case body, and the expansion force on the battery cell can be smoothly transmitted to the case body by means of the support beam, thereby providing a better anti-expansion effect.

In some embodiments, the first beam side surface includes a first section and a second section connected to each other. One end of the support beam is connected to the first section in the first direction, and the second section is disposed obliquely toward the second beam side surface; the first section is disposed coplanar with the second section; or the first section is disposed parallel to the second beam side surface.

Through the above structure, the limiting beam provides a more stable support for the battery cell, and the expansion force of the battery cell is smoothly transmitted from the limiting beam to the case body by means of the support beam, thereby providing a better anti-expansion effect.

Further, the limiting beam can provide a stable supporting force for the battery cell. On this basis, the support beam can be better connected, in an abutting manner, between the limiting beam and the inner wall of the case body, thereby smoothly transmitting the expansion force on the battery cell to the case body.

In some embodiments, an included angle A is formed between the second beam side surface and the second section, and 0° < A ≤ 20°.

Therefore, the included angle between the second beam side surface and the second section is set within the above range, which can make better use of the mounting space inside the case body while improving the supporting force of the limiting beam on the battery cell, thereby providing the space utilization rate.

In some embodiments, one end of the support beam is connected to the first section in the first direction. Therefore, the limiting beam provides a more stable support for the battery cell, and the expansion force of the battery cell is smoothly transmitted from the limiting beam to the case body by means of the support beam, thereby providing a better anti-expansion effect.

In some embodiments, the limiting beam includes at least one support rib, and the support rib is connected between the first beam side surface and the second beam side surface.

Through the above structure, the supporting force between the first beam side surface and the second beam side surface can be improved, such that the limiting beam can more stably support the battery cell.

In some embodiments, the support rib is disposed obliquely relative to the first direction. In this way, when the battery cell generates an expansion and deformation acting force during cycling, the support rib connected to the second beam side surface may change the direction of the expansion and deformation acting force obtained in the first direction, and transmit it to the first beam side surface and then to the support beam, thereby improving the overall rigidity of the limiting beam resisting the deformation in the first direction, and effectively avoiding excessive expansion and deformation of the battery cell during cycling.

In some embodiments, the limiting beam includes a plurality of support ribs, and at least two adjacent support ribs are spaced apart from each other and inclined in opposite directions relative to the first direction.

By providing the support ribs, the structural stability of the limiting beam can be improved, such that the limiting beam can more stably constrain the expansion of the battery cell.

In some embodiments, one end, distal to the second beam side surface, of at least one of the support ribs is fixedly connected to a junction between the first section and the second section. Through the above structure, the overall stability of the limiting beam can be higher.

In some embodiments, the second beam side surface includes an upper section, a middle section, and a lower section that are evenly divided in a height direction thereof; and a number of the support ribs connected to the middle section is not less than a number of the support ribs connected to the upper section or the lower section.

Through the above structure, the support ribs can better support and constrain a middle region of the large surface of the battery cell.

In some embodiments, one end of all the support ribs is connected to the middle section. Therefore, all the support ribs can support the middle region of the large surface of the battery cell, thereby better constraining the expansion and deformation of the large surface of the battery cell.

In some embodiments, the limiting beam further includes a top surface and a bottom surface, and the top surface and the bottom surface are separately connected to two ends of the first beam side surface and the second beam side surface, so as to surround and define an internal cavity of the limiting beam.

Through the above structure, the limiting beam forms the internal cavity; that is, the limiting beam is configured as a hollow structure, which can reduce the weight of the limiting beam. Therefore, when the limiting beam is disposed inside the case body, the overall weight of the case body and the battery can be reduced.

In some embodiments, the limiting beam includes a support plate, and the support plate is connected between the top surface and the bottom surface to separate the internal cavity of the limiting beam into at least two sub-cavities.

Therefore, by providing the support plate, the internal cavity of the limiting beam is separated, such that the limiting beam is formed as a multi-cavity structure, thereby resisting a larger expansion force, and providing a better supporting effect.

In some embodiments, the limiting beam includes at least one first sub-rib and at least one second sub-rib, the first sub-rib is connected between the first beam side surface and the support plate, and the second sub-rib is connected between the support plate and the second beam side surface.

By providing the first sub-rib and the second sub-rib, the first beam side surface, the support plate, and the second beam side surface can be better supported, thereby improving the structural strength of the limiting beam, and improving the stability of the limiting beam in supporting the battery cell.

In some embodiments, the support plate includes a first sub-plate and a second sub-plate connected to each other. The second sub-plate is disposed obliquely toward the second beam side surface, and the first sub-plate is disposed coplanar with the second sub-plate; or the first sub-plate is disposed parallel to the second beam side surface.

Through the above structure, when the limiting beam is configured to support the battery cell, the expansion force on the large surface of the battery cell can be better transmitted to the support beam by means of the limiting beam, and then transmitted to the case body.

In some embodiments, one end of one said first sub-rib is fixedly connected to the junction between the first section and the second section, and the other end of the first sub-rib is fixedly connected to a junction between the first sub-plate and the second sub-plate; and one end of one said second sub-rib is fixedly connected to the junction between the first sub-plate and the second sub-plate, and the other end of the second sub-rib is connected to the second beam side surface.

Through the above structure, not only can the connection stability between the first section and the second section and between the first sub-plate and the second sub-plate be improved, but also the expansion force on the battery cell can be smoothly transmitted to the support plate and the first beam side surface by means of the first sub-rib and the second sub-rib, and finally transmitted to the case body by means of the support beam.

The first sub-rib is disposed parallel to the first direction, and the second sub-rib is disposed obliquely relative to the first direction. In this way, when the battery cell generates an expansion and deformation acting force during cycling, the second sub-rib connected to the second beam side surface may change the direction of the expansion and deformation acting force obtained in the first direction and then transmit it to the support plate, and thus the support plate transmits the expansion and deformation acting force to the first beam side surface in the first direction by means of the first sub-rib, such that the expansion and deformation acting force can be transmitted to the support beam, thereby improving the overall rigidity of the limiting beam resisting the deformation in the first direction, and effectively avoiding excessive expansion and deformation of the battery cell during cycling.

In some embodiments, the limiting beam includes a plurality of first sub-ribs and a plurality of second sub-ribs; two adjacent first sub-ribs are spaced apart from each other and disposed in parallel; and/or at least two adjacent second sub-ribs are spaced apart from each other and inclined in opposite directions relative to the first direction.

In some embodiments, at least one of the second sub-ribs and the corresponding first sub-rib are jointly connected to a same position of the support plate.

Through the above structure, the overall structural strength of the limiting beam can be improved, so as to better support the battery cell and provide a stable constraint for the expansion force of the battery cell.

In some embodiments, the second beam side surface includes an upper section, a middle section, and a lower section that are evenly divided in a height direction thereof, and a number of the second sub-ribs connected to the middle section is not less than a number of the second sub-ribs connected to the upper section or the lower section.

In some embodiments, all the second sub-ribs are connected to the middle section.

Through the above structure, the second sub-ribs can better support and constrain the middle region of the large surface of the battery cell.

In a second aspect, the present application further provides an electric device. The electric device includes the battery as described above, and the battery is configured to provide electric energy for the electric device.

According to the battery and the electric device described above, the battery cell is placed in the accommodating space, and the battery cell in the accommodating space can be constrained by means of the limiting beams at two ends. The first beam side surface of the limiting beam can abut against the large surface of the battery cell, and an included angle is formed between the second beam side surface and at least part of the first beam side surface, such that the limiting beam can more stably support and constrain the expansion on the large surface of the battery cell. In addition, the fixing member can limit each limiting beam in the first direction, thereby reducing the probability of the limiting beam tipping over under the action of expansion and deformation of the battery cell, and further improving the expansion constraining force on the battery cell.

### BRIEF DESCRIPTION OF THE DRAWINGS

To more clearly illustrate the technical solutions according to embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts.
FIG. 1 is a schematic structural diagram of a vehicle according to one or more embodiments.
FIG. 2 is a schematic diagram of an exploded structure of a battery according to one or more embodiments.
FIG. 3 is a schematic diagram of an exploded structure of a battery cell according to one or more embodiments.
FIG. 4 is a schematic structural diagram of a case according to one or more embodiments.
FIG. 5 is a top view of a case according to one or more embodiments.
FIG. 6 is a side view of a case according to one or more embodiments.
FIG. 7 is a partially enlarged view of the portion B in FIG. 6.
FIG. 8 is a partial schematic diagram of a case according to one or more embodiments.
FIG. 9 is a partial schematic diagram of a case according to one or more embodiments.

Description of reference numerals: 1000, vehicle; 100, battery; 200, controller; 300, motor; 10, case; 20, battery cell; 11, first part; 12, second part; 13, case body; 14, limiting beam; 15, fixing member; 16, accommodating space; 17, connecting member; 18, support beam; 21, end cover; 22, housing; 23, electrode assembly; 141, first beam side surface; 142, second beam side surface; 143, support rib; 144, top surface; 145, bottom surface; 146, internal cavity; 147, support plate; 148, first sub-rib; 149, second sub-rib; 1411, first section; 1412, second section; 1421, upper section; 1422, middle section; 1423, lower section; 1471, first sub-plate; 1472, second sub-plate; a, first direction; b, second direction.

### DETAILED DESCRIPTION

To make the above objectives, features, and advantages of the present application more apparent and easy to understand, specific embodiments of the present application will be described in detail below with reference to the drawings. In the following description, numerous specific details are set forth in order to provide a thorough understanding of the present application. However, the present application can be implemented in many other ways different from those described herein, and similar improvements can be made by those skilled in the art without departing from the spirit of the present application. Therefore, the present application is not limited to the specific embodiments disclosed below.

In the description of the present application, it should be understood that if there are the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like, orientations or positional relationships indicated by these terms are based on the orientations or positional relationships shown in the drawings. They are merely for the convenience of describing the present application and simplifying the description, rather than indicating or implying that the apparatus or element referred to must have a specific orientation or be constructed and operated in the specific orientation, and thus should not be construed as limiting the present application.

In addition, if there are the terms "first" and "second", these terms are used for description only and are not to be construed as indicating or implying relative importance or to implicitly indicate the number of technical features indicated. Thus, a feature defined by "first" or "second" may explicitly or implicitly indicate that at least one such feature is included. In the description of the present application, if there is the term "plurality of", unless otherwise explicitly and specifically defined, "plurality of" means at least two, for example, two, three, and the like.

In the present application, unless otherwise explicitly specified and defined, if there are the terms "mount", "interconnect", "connect", "fix", and the like, these terms should be interpreted in their broad senses. For example, unless otherwise explicitly defined, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the present application can be understood according to specific conditions.

In the present application, unless otherwise explicitly specified and defined, if there is a description that a first feature is "above" or "below" a second feature and other similar descriptions, the meanings thereof may be that the first feature and the second feature are in direct contact, or that the first feature and the second feature are in indirect contact via an intermediate. Moreover, a first feature being "on", "above", and "over" a second feature may be that the first feature is directly above or obliquely above the second feature, or simply indicates that the horizontal height of the first feature is higher than that of the second feature. A first feature being "under", "below", and "beneath" a second feature may be that the first feature is directly below or obliquely below the second feature, or simply indicates that the horizontal height of the first feature is lower than that of the second feature.

It should be noted that if an element is referred to as being "fixed to" or "disposed on" another element, the element may be directly on the other element or there may be an intermediate element in between. If an element is referred to as being "connected" to another element, the element may be directly connected to the other element or there may also be an intermediate element in between. The terms "perpendicular", "horizontal", "upper", "lower", "left", "right", and similar descriptions, if present, are used in the present application for description only and do not necessarily indicate the only implementation.

At present, judging from the trends in the market, the application of power batteries is becoming increasingly widespread. Power batteries are not only applied in energy storage power systems such as hydropower, thermal power, wind power, and solar power stations, but are also widely applied in electric transportation vehicles such as electric bicycles, electric motorcycles, and electric cars, and other fields. With the continuous expansion of the application field of power batteries, the market demand for power batteries is also constantly increasing.

A battery cell is the smallest unit forming a battery. During cycling, the electrochemical reaction occurs inside the battery cell, causing the battery cell to expand. As the battery cell continuously expands, the overall performance of the battery will be affected.

Based on this, to prevent the performance of the battery from deteriorating due to the continuous expansion of the battery cell during cycling, a certain support structure is generally provided inside the case to provide support and constraint for the battery cell inside the case. However, the current support structure exhibits a relatively poor anti-expansion effect and cannot provide sufficient support and constraint for the expansion of the battery cell.

Based on the above consideration, to solve the problem that the current support structure exhibits a relatively poor anti-expansion effect and cannot provide sufficient support and constraint for the expansion of the battery cell, one or more embodiments of the present application provide a battery and an electric device. The battery cell is placed in the accommodating space, and the battery cell in the accommodating space can be constrained by means of the limiting beams at two ends. The first beam side surface of the limiting beam can abut against the large surface of the battery cell, and at least part of the first beam side surface is disposed obliquely toward the second beam side surface, such that the limiting beams can more stably support and constrain the expansion on the large surface of the battery cell. In addition, the fixing member can limit each limiting beam in the first direction, thereby reducing the probability of the limiting beams tipping over under the action of expansion and deformation of the battery cell, and further improving the expansion constraining force on the battery cell.

The embodiments of the present application provide an electric device using a battery as the power source. The electric device may be, but is not limited to, a mobile phone, a tablet, a laptop computer, an electric toy, an electric tool, an electric bike, an electric car, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

For ease of explanation, the following embodiments are described by taking a vehicle 1000 as an example of the electric device according to an embodiment of the present application.

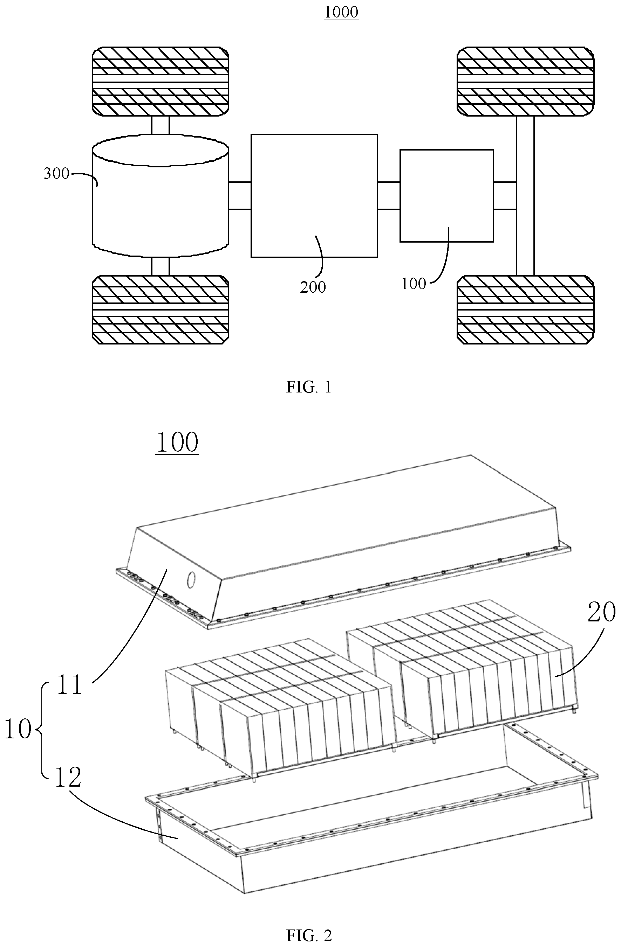

Referring to FIG. 1, the vehicle 1000 may be a fuel vehicle, a gas vehicle, or a new energy vehicle. The new energy vehicle may be a pure electric vehicle, a hybrid vehicle, an extended-range vehicle, or the like. A battery 100 is disposed inside the vehicle 1000, and the battery 100 may be disposed at the bottom, head, or tail of the vehicle 1000. The battery 100 may be configured to power the vehicle 1000. For example, the battery 100 may serve as an operation power source for the vehicle 1000. The vehicle 1000 may further include a controller 200 and a motor 300. The controller 200 is configured to control the battery 100 to power the motor 300, e.g., for the operation power needed by the vehicle 1000 for start-up, navigation, and driving.

In some embodiments of the present application, the battery 100 may not only serve as an operation power source for the vehicle 1000, but also as a driving power source for the vehicle 1000 to, replacing or partially replacing fuel or natural gas, provide driving power for the vehicle 1000.

Referring to FIG. 2, the battery 100 includes a case 10 and battery cells 20. The battery cells 20 are accommodated in the case 10. The case 10 is configured to provide an accommodating space for the battery cells 20, and the case 10 may be of various structures. In some embodiments, the case 10 may include a first part 11 and a second part 12. The first part 11 and the second part 12 are lidded with each other, and the first part 11 and the second part 12 jointly define an accommodating space for accommodating the battery cells 20. The second part 12 may be of a hollow structure with one end open, and the first part 11 may be of a plate-shaped structure. The open side of the second part 12 is lidded with the first part 11, such that the first part 11 and the second part 12 jointly define the accommodating space. The first part 11 and the second part 12 may also both be of a hollow structure with one side open, and the open side of the second part 12 is lidded with the open side of the first part 11. Certainly, the case 10 formed by the first part 11 and the second part 12 may be in various shapes, such as a cylinder and a rectangular parallelepiped.

In the battery 100, a plurality of battery cells 20 may be provided, and the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case 10. Certainly, the situation may be that in the battery 100, the plurality of battery cells 20 are first connected in series, in parallel, or in series-parallel to form battery modules, and then the plurality of battery modules are connected in series, in parallel, or in series-parallel to form a whole and accommodated in the case 10. The battery 100 may further include other structures. For example, the battery 100 may further include a busbar component for achieving an electrical connection among the plurality of battery cells 20.

Each battery cell 20 may be a secondary battery or a primary battery; it may also be a lithium-sulfur battery, a sodium-ion battery, or a magnesium-ion battery, but is not limited thereto. The battery cell 20 may be cylindrical, flat, rectangular parallelepiped-shaped, or in other shapes.

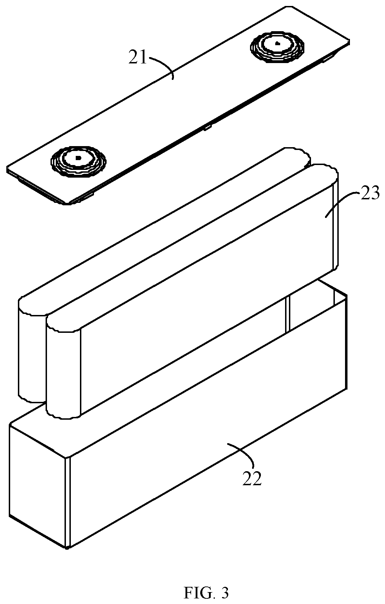

Referring to FIG. 3, the battery cell 20 refers to the smallest unit forming a battery. As shown in FIG. 3, the battery cell 20 includes an end cover 21, a housing 22, an electrode assembly 23, and other functional components.

The end cover 21 refers to a component that lids the opening of the housing 22 to isolate the internal environment of the battery cell 20 from the external environment. Without limitation, the shape of the end cover 21 may be adapted to the shape of the housing 22 to match the housing 22. In some embodiments, the end cover 21 may be made of a material with a certain hardness and strength (for example, an aluminum alloy), such that the end cover 21 is not easily deformed when being pressed or collided. This enables the battery cell 20 to have higher structural strength, and the safety performance can also be improved. Functional components such as an electrode terminal 21a may be provided on the end cover 21. The electrode terminal may be configured to be electrically connected to the electrode assembly 23 to output or input the electric energy of the battery cell 20. In some embodiments, the end cover 21 may also be provided with a pressure relief mechanism for relieving the internal pressure when the internal pressure or temperature of the battery cell 20 reaches a threshold. The end cover 21 may also be made of various materials, such as copper, iron, aluminum, stainless steel, aluminum alloy, and plastic, which is not specially limited in the embodiments of the present application. In some embodiments, the inner side of the end cover 21 may also be provided with an insulating member, and the insulating member may be configured to isolate an electrical connection component in the housing 22 from the end cover 21 to reduce the risk of short circuits. Illustratively, the insulating member may be made of plastic, rubber, or the like.

The housing 22 is an assembly configured to form the internal environment of the battery cell 20 in combination with the end cover 21. The formed internal environment may be used to accommodate the electrode assembly 23, the electrolytic solution, and other components. The housing 22 and the end cover 21 may be independent components. An opening may be formed in the housing 22, and at the opening, the end cover 21 lids the opening to form the internal environment of the battery cell 20. Without limitation, the end cover 21 and the housing 22 may be integrated. Specifically, the end cover 21 and the housing 22 may form a common connecting surface before other components are placed in the housing, and when the interior of the housing 22 needs to be encapsulated, the housing 22 is lidded with the end cover 21. The housing 22 may be in various shapes and sizes, such as a rectangular parallelepiped, a cylinder, and a hexagonal prism. Specifically, the shape of the housing 22 may be determined according to the specific shape and size of the electrode assembly 23. The housing 22 may be made of various materials, such as copper, iron, aluminum, stainless steel, aluminum alloy, and plastic, which is not specially limited in the embodiments of the present application.

The electrode assembly 23 is a component where the electrochemical reaction occurs in the battery cell 20. One or more electrode assemblies 23 may be accommodated in the housing 22. The electrode assembly 23 is mainly formed by winding or stacking a positive electrode plate and a negative electrode plate, and a separator is generally disposed between the positive electrode plate and the negative electrode plate. The portions of the positive electrode plate and the negative electrode plate that contain active substances constitute the main body part of the electrode assembly, and the portions of the positive electrode plate and the negative electrode plate that do not contain the active substances each constitute a tab. The positive electrode tab and the negative electrode tab may be located together at one end of the main body part or separately at two ends of the main body part. During the charging and discharging process of the battery, the positive electrode active substance and the negative electrode active substance react with the electrolytic solution, and the tabs are connected to the electrode terminals to form a current circuit.

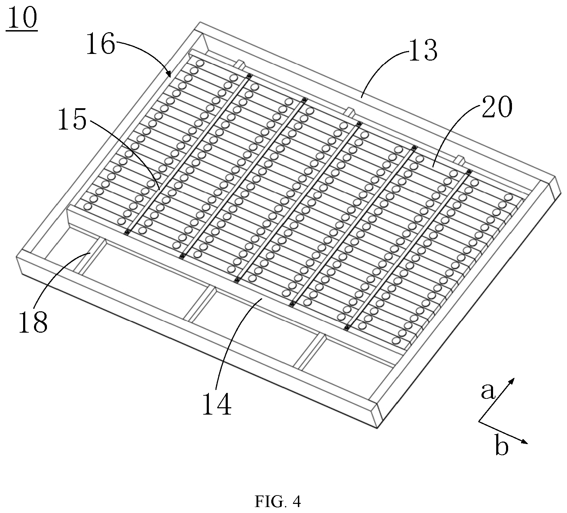

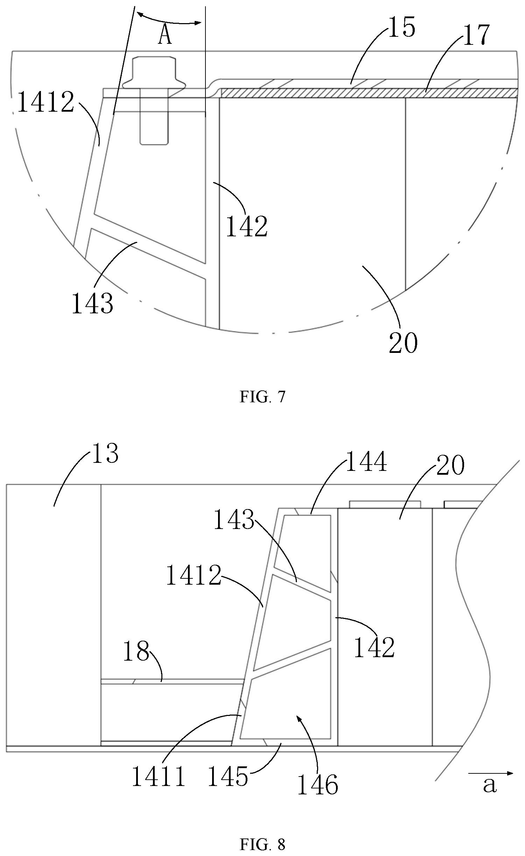

Referring to FIGs. 4, 5, 6, and 7 together, an embodiment of the present application provides a battery 100. The battery 100 includes a case 10 and battery cells 20. The case 10 includes a case body 13, a limiting beam 14, and a fixing member 15. At least two limiting beams 14 are disposed in the case body 13 and spaced apart from each other in a first direction a, and two adjacent limiting beams 14 and the case body 13 define, in an enclosing manner, an accommodating space 16 for accommodating the battery cells 20. At least one of the limiting beams 14 includes a first beam side surface 141 and a second beam side surface 142 disposed opposite to each other in the first direction a. The second beam side surface 142 is configured as a vertical plane for abutting against a large surface of the battery cell 20, and the large surface is the surface with the largest surface area in the battery cell 20. At least part of the first beam side surface 141 is disposed obliquely toward the second beam side surface 142. The fixing member 15 extends in the first direction a and is connected between two adjacent limiting beams 14, and is configured to limit the two adjacent limiting beams 14 in the first direction a.

It should be noted that the case body 13 refers to an internal hollow structure capable of providing a basis for mounting and accommodating the battery cells 20 and other structures in the battery 100. When the battery cells 20 are disposed inside the case body 13, the case body 13 can provide a closed and stable environment for the battery cells 20, providing a certain protective effect on the battery cells 20.

The limiting beam 14 refers to a structure that is disposed inside the case body 13 and capable of supporting the battery cells 20 to constrain the expansion and deformation of the battery cells 20. Two limiting beams 14 may be provided and are separately disposed on two opposite sides of the case body 13 in the first direction a. In this way, the two limiting beams 14 and the inner wall of the case body 13 jointly define, in an enclosing manner, the accommodating space 16, and the battery cells 20 can be placed in the accommodating space 16.

The large surface of the battery cell 20 refers to the surface with the largest surface area in the battery cell 20. Specifically, the battery cell 20 is generally configured as a rectangular structure, such that the battery cell 20 generally has two large surfaces, and the two large surfaces are disposed opposite to each other and parallel to each other.

Further, at least one of the limiting beams 14 includes a first beam side surface 141 and a second beam side surface 142 disposed opposite to each other in the first direction a, and the second beam side surface 142 is disposed facing the large surface of the battery cell 20 in the accommodating space 16 and extends in the vertical direction. When the battery cell 20 is placed in the accommodating space 16, the second beam side surface 142 of the limiting beam 14 may abut against the large surface of the battery cell 20, thereby providing good support for the large surface of the battery cell 20.

An included angle is formed between the second beam side surface 142 and at least part of the first beam side surface 141. That is, the at least part of the first beam side surface 141 is disposed obliquely in the vertical direction, and the distance between the first beam side surface 141 disposed obliquely and the second beam side surface 142 gradually increases from top to bottom. Therefore, the limiting beam 14 provides a more stable support for the battery cell 20.

It can be understood that in some other embodiments, the number of the limiting beams 14 may also be set to be greater, and every two adjacent limiting beams 14 are spaced apart from each other in the first direction a, and thus define, in an enclosing manner, an accommodating space 16 with the inner wall of the case body 13. Each accommodating space 16 can be used for mounting the battery cell 20.

In addition, the fixing member 15 refers to a structure that can be connected to each limiting beam 14 and limits each limiting beam 14 in the first direction a to better fix the battery cell 20 in the accommodating space 16.

Specifically, the fixing member 15 may, but is not limited to, be configured as a steel strip structure, and the steel strip extends in the first direction a. Taking the arrangement of two limiting beams 14 as an example, two opposite ends of the steel strip in the first direction a are connected to the two limiting beams 14, respectively, thereby providing tension for the two limiting beams 14 in the first direction a.

In this way, when the expansion force of the battery cell 20 is relatively large, the steel strip can tighten the limiting beams 14 at two ends through the tension, reducing the probability of the limiting beam 14 tipping over due to the expansion force of the battery cell 20, thereby making the support and constraint of the limiting beam 14 for the battery cell 20 more stable.

Through the above structure, the limiting beam 14 can constrain the battery cell 20 in the accommodating space 16. The first beam side surface 141 of the limiting beam 14 can abut against the large surface of the battery cell 20, and an included angle is formed between the second beam side surface 142 and at least part of the first beam side surface 141, such that the limiting beam 14 can more stably support and constrain the expansion on the large surface of the battery cell 20. In addition, the fixing member 15 can limit each limiting beam 14 in the first direction a, thereby reducing the probability of the limiting beam 14 tipping over under the action of expansion and deformation of the battery cell 20, and further improving the expansion constraining force on the battery cell 20.

In some embodiments, the fixing member 15 is provided with a connecting surface (not shown in the figure). The connecting surface is disposed facing the accommodating space 16 and configured to be connected to the battery cell 20 in the accommodating space 16.

Specifically, when the fixing member 15 is connected to top ends of two limiting beams 14, the connecting surface is the bottom surface 145 of the fixing member 15. When the battery cell 20 is placed in the accommodating space 16, the connecting surface is disposed facing the battery cell 20.

Therefore, the fixing member 15 is connected to the battery cell 20 in the accommodating space 16 by means of the connecting surface, which can further enhance the constraining force of the fixing member 15 on the battery cell 20.

In some embodiments, the case 10 further includes a connecting member 17, and the connecting member 17 is disposed between the connecting surface and a top cover of the battery cell 20 and configured to connect the fixing member 15 and the battery cell 20.

For example, the connecting member 17 includes an adhesive. Specifically, the adhesive may, but is not limited to, be configured as a structural adhesive. That is, the structural adhesive is applied between the connecting surface and the top cover of the battery cell 20 to fixedly connect the fixing member 15 to the battery cell 20, thereby enhancing the constraining force of the fixing member 15 on the battery cell 20.

Certainly, the connecting member 17 may also be configured as other structures, such as a double-sided adhesive tape or other connecting structures, which will not be described in detail herein.

By providing the connecting member 17, the connecting surface can be quickly and stably connected to the top cover of the battery cell 20, thereby further enhancing the constraining force of the fixing member 15 on the battery cell 20.

In some embodiments, the fixing member 15 is detachably connected to each limiting beam 14.

Specifically, the fixing member 15 may be detachably connected to each limiting beam 14 by means of, but not limited to, a bolting connection, a snap-fit connection, or other connection manners. Therefore, the fixing member 15 and each limiting beam 14 can be more flexibly disassembled and assembled, which facilitates the operation.

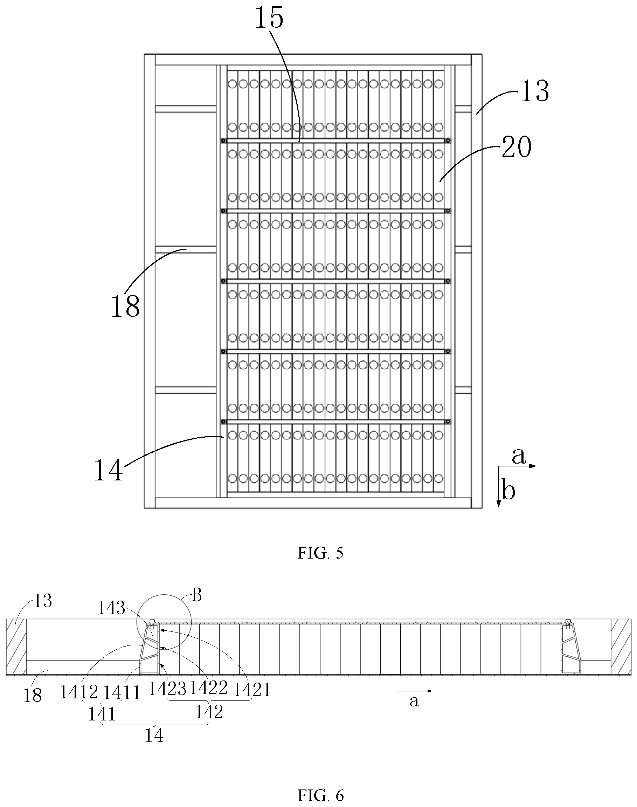

As shown in FIGs. 6, 7, and 8, in some embodiments, the battery 10 further includes a support beam 18, and the support beam 18 is connected between the first beam side surface 141 and the inner wall of the case body 13 in the first direction a.

Specifically, the support beam 18 extends in the first direction a, and two opposite ends of the support beam 18 abut against the first beam side surface 141 and the inner wall of the case body 13, respectively.

Therefore, by means of the support beam 18, the second beam side surface 142 of the limiting beam 14 can better abut against the large surface of the battery cell 20 and provide a stable supporting force for the battery cell 20. In addition, the expansion force on the battery cell 20 can also be smoothly transmitted to the case body 13 by means of the support beam 18, thereby providing a better anti-expansion effect.

In some embodiments, the first beam side surface 141 includes a first section 1411 and a second section 1412 connected to each other. One end of the support beam 18 is connected to the first section 1411 in the first direction a, and the second section 1412 is disposed obliquely toward the second beam side surface 142; the first section 1411 is disposed coplanar with the second section 1412; or the first section 1411 is disposed parallel to the second beam side surface 142.

Specifically, the first section 1411 and the second section 1412 are sequentially arranged in the vertical direction; that is, the second section 1412 is disposed at the upper end of the first section 1411.

An included angle is formed between the second section 1412 and the second beam side surface 142; that is, the second section 1412 is disposed obliquely in the vertical direction, thereby allowing the limiting beam 14 to be formed as a structure that is small at the top and large at the bottom, so as to provide a more stable support for the battery cell 20.

Further, the support beam 18 is disposed on the bottom surface 145 of the case body 13 and extends in the first direction a. One end of the support beam 18 abuts against the inner wall of the case body 13, and the other end of the support beam abuts against the first section 1411, such that the expansion force of the battery cell 20 is transmitted from the limiting beam 14 to the case body 13, thereby providing a better anti-expansion effect.

In addition, one end of the support beam 18 is connected to the first section 1411 in the first direction a. Therefore, the limiting beam 14 provides a more stable support for the battery cell 20, and the expansion force of the battery cell 20 is smoothly transmitted from the limiting beam 14 to the case body 10 by means of the support beam 18, thereby providing a better anti-expansion effect.

Therefore, through the above structure, the limiting beam 14 provides a more stable support for the battery cell 20, and the expansion force of the battery cell 20 is smoothly transmitted from the limiting beam 14 to the case body 13 by means of the support beam 18, thereby providing a better anti-expansion effect.

In addition, the first section 1411 is disposed coplanar with the second section 1412; or the first section 1411 is disposed parallel to the second beam side surface 142.

When the first section 1411 is disposed coplanar with the second section 1412, both the first section 1411 and the second section 1412 are disposed obliquely in the vertical direction, and the inclination angles of the first section and the second section are equal. In this case, the first section 1411 and the second section 1412 jointly form an inclined surface. When the support beam 18 abuts against the first section 1411, an end part of the support beam 18 needs to be configured to match the slope of the first section 1411, such that the support beam and the first section can be tightly connected.

When the first section 1411 is disposed parallel to the second beam side surface 142, the first section 1411 is disposed in the vertical direction, and the first section 1411 intersects with the second section 1412. In this case, the support beam 18 is perpendicular to the first section 1411, such that the support beam 18 can more stably abut against the first section 1411.

Through the above structure, the limiting beam 14 can provide a stable supporting force for the battery cell 20. On this basis, the support beam 18 can be better connected, in an abutting manner, between the limiting beam 14 and the inner wall of the case body 13, thereby smoothly transmitting the expansion force on the battery cell 20 to the case body 13.

In some embodiments, an included angle A is formed between the second beam side surface 142 and the second section 1412, where 0 degree (°) < A ≤ 20°.

Specifically, the included angle between the second beam side surface 142 and the second section 1412 is an angle at which the second section 1412 is inclined relative to the vertical direction. Therefore, the greater the above included angle A is, the better the supporting effect of the limiting beam 14 on the battery cell 20 is. However, the mounting space occupied by the limiting beam 14 in the case body 13 is increased accordingly, which is not conducive to mounting other structures of the battery 100 inside the case body 13.

Therefore, the included angle between the second beam side surface 142 and the second section 1412 is set within the above range, which can make better use of the mounting space inside the case body 13 while improving the supporting force of the limiting beam 14 on the battery cell 20, thereby providing the space utilization rate.

In some embodiments, the limiting beam 14 includes at least one support rib 143, and the support rib 143 is connected between the first beam side surface 141 and the second beam side surface 142.

Specifically, the limiting beam 14 is configured as an internal hollow structure, which can reduce the weight of the limiting beam 14, thereby reducing the overall weight of the battery 100. Meanwhile, the support rib 143 is disposed inside the limiting beam 14, and the support rib 143 is supported between the first beam side surface 141 and the second beam side surface 142, improving the supporting force between the first beam side surface 141 and the second beam side surface 142, such that the limiting beam 14 can more stably support the battery cell 20.

In some embodiments, the support rib 143 is disposed obliquely relative to the first direction a. In this way, when the battery cell 20 generates an expansion and deformation acting force during cycling, the support rib 143 connected to the second beam side surface 142 may change the direction of the expansion and deformation acting force obtained in the first direction a, and transmits it to the first beam side surface 142 and then to the support beam 18, thereby improving the overall rigidity of the limiting beam 14 resisting the deformation in the first direction a, and effectively avoiding excessive expansion and deformation of the battery cell 20 during cycling.

In some embodiments, the limiting beam 14 includes a plurality of support ribs 143, and at least two adjacent support ribs 143 are spaced apart from each other and inclined in opposite directions relative to the first direction a.

The plurality of support ribs 143 can improve the supporting force on the first beam side surface 141 and the second beam side surface 142. In addition, the plurality of support ribs 143 are spaced apart from each other in the vertical direction, such that uniform multi-point support is formed on the first beam side surface 141 and the second beam side surface 142, thereby improving the support stability.

In addition, two adjacent support ribs 143 are spaced apart from each other and inclined in opposite directions relative to the first direction a, which can further improve the support stability.

By providing the support ribs 143, the structural stability of the limiting beam 14 can be improved, such that the limiting beam 14 can more stably constrain the expansion of the battery cell 20.

In some embodiments, one end, distal to the second beam side surface 142, of at least one of the support ribs 143 is fixedly connected to a junction between the first section 1411 and the second section 1412.

One end, distal to the second beam side surface 142, of the support rib 143 is fixed to the junction between the first section 1411 and the second section 1412, such that the support rib 143 can serve a certain function in connecting the first section 1411 and the second section 1412, and can also provide support for the first section 1411 and the second section 1412. Therefore, through the above structure, the overall stability of the limiting beam 14 can be higher.

In some embodiments, the second beam side surface 142 includes an upper section 1421, a middle section 1422, and a lower section 1423 that are evenly divided in a height direction thereof. The number of the support ribs 143 connected to the middle section 1422 is not less than the number of the support ribs 143 connected to the upper section 1421 or the lower section 1423.

It should be noted that the support rib 143 connected to the middle section 1422 means that one end of the support rib 143 connected to the second beam side surface 142 is located in the middle section 1422 of the second beam side surface 142. Similarly, one end of the support rib 143 connected to the second beam side surface 142 may also be located in the upper section 1421 or the lower section 1423.

Specifically, the middle section 1422 of the second beam side surface 142 is located between the upper section 1421 and the lower section 1423. When the second beam side surface 142 abuts against the large surface of the battery cell 20, the middle section 1422 can correspond to a middle region of the large surface of the battery cell 20.

When the battery cell 20 undergoes expansion, since the large surface of the battery cell 20 has the largest area, the expansion and deformation on the large surface are generally greater and mostly concentrated in the middle region of the large surface.

Therefore, the number of the support ribs 143 connected to the middle section 1422 is not less than the number of the support ribs 143 connected to the upper section 1421 or the lower section 1423; that is, the support ribs 143 provide a greater supporting force for the middle section 1422, thereby better supporting and constraining the large surface of the battery cell 20.

Through the above structure, the support ribs 143 can better support and constrain the middle region of the large surface of the battery cell 20.

In some embodiments, one end of all the support ribs 143 is connected to the middle section 1422.

Therefore, one end of all the support ribs 143 is disposed in the middle section 1422, such that all the support ribs 143 can support the middle region of the large surface of the battery cell 20, thereby better constraining the expansion and deformation of the large surface of the battery cell 20.

In some embodiments, the limiting beam 14 further includes a top surface 144 and a bottom surface 145, and the top surface 144 and the bottom surface 145 are separately connected to two ends of the first beam side surface 141 and the second beam side surface 142, so as to surround and define an internal cavity 146 of the limiting beam 14.

Through the above structure, the limiting beam 14 forms the internal cavity 146; that is, the limiting beam 14 is configured as a hollow structure, which can reduce the weight of the limiting beam 14. Therefore, when the limiting beam 14 is disposed inside the case body 13, the overall weight of the case body 13 and the battery 100 can be reduced.

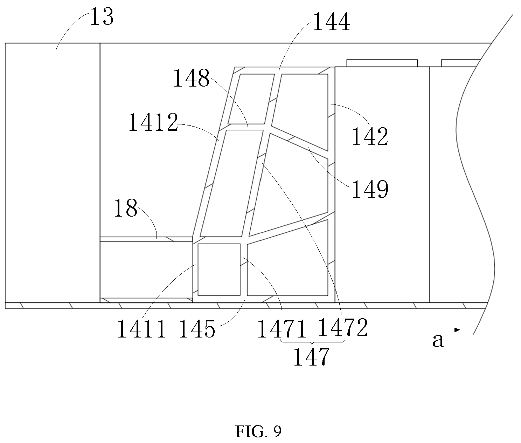

As shown in FIGs. 6 and 9, in some embodiments, the limiting beam 14 includes a support plate 147, and the support plate 147 is connected between the top surface 144 and the bottom surface 145 to separate the internal cavity 146 of the limiting beam 14 into at least two sub-cavities.

Specifically, the support plate 147 may be configured as a structure matching the first beam side surface 141. That is, when the first beam side surface 141 includes the first section 1411 and the second section 1412, the support plate 147 is also configured as a two-segment structure, and separately corresponds to the first section 1411 and the second section 1412 and is disposed parallel to the first section and the second section.

Further, one support plate 147 may be provided, and separates the internal cavity 146 of the limiting beam 14 into two sub-cavities sequentially arranged in the first direction a. Certainly, two or more support plates 147 may also be provided, and separate the internal cavity 146 of the limiting beam 14 into a plurality of sub-cavities.

Therefore, by providing the support plate 147, the internal cavity 146 of the limiting beam 14 is separated, such that the limiting beam 14 is formed as a multi-cavity structure, thereby resisting a larger expansion force and providing a better supporting effect.

In some embodiments, the limiting beam 14 includes at least one first sub-rib 148 and at least one second sub-rib 149, the first sub-rib 148 is connected between the first beam side surface 141 and the support plate 147, and the second sub-rib 149 is connected between the support plate 147 and the second beam side surface 142.

Specifically, when the internal cavity 146 is separated into two sub-cavities by the support plate 147, the first sub-rib 148 may be disposed in the sub-cavity between the first beam side surface 141 and the support plate 147, such that the first sub-rib 148 is supported between the first beam side surface 141 and the support plate 147. The second sub-rib 149 may be disposed in the sub-cavity between the support plate 147 and the second beam side surface 142, such that the second sub-rib 149 is supported between the support plate 147 and the second beam side surface 142.

Further, a plurality of first sub-ribs 148 and a plurality of second sub-ribs 149 may be provided and are spaced apart from each other in the vertical direction, so as to improve the supporting effect.

By providing the first sub-rib 148 and the second sub-rib 149, the first beam side surface 141, the support plate 147, and the second beam side surface 142 can be better supported, thereby improving the structural strength of the limiting beam 14, and improving the stability of the limiting beam 14 in supporting the battery cell 20.

In some embodiments, the support plate 147 includes a first sub-plate 1471 and a second sub-plate 1472 connected to each other. The second sub-plate 1472 is disposed obliquely toward the second beam side surface 142, and the first sub-plate 1471 is disposed coplanar with the second sub-plate 1472; or the first sub-plate 1471 is disposed parallel to the second beam side surface 142.

Specifically, the first sub-plate 1471 corresponds to the second section 1412 and is disposed parallel to the second section, and the first sub-plate 1471 corresponds to the first section 1411 and is disposed parallel to the first section. Therefore, included angles are formed between the second sub-plate 1472 and the second beam side surface 142 and between the second section 1412 and the second beam side surface, and the included angles are equal.

Through the above structure, when the limiting beam 14 is configured to support the battery cell 20, the expansion force on the large surface of the battery cell 20 can be better transmitted to the support beam 18 by means of the limiting beam 14, and then transmitted to the case body 13.

In some embodiments, one end of one said first sub-rib 148 is fixedly connected to the junction between the first section 1411 and the second section 1412, and the other end of the first sub-rib 148 is fixedly connected to a junction between the first sub-plate 1471 and the second sub-plate 1472; one end of one said second sub-rib 149 is fixedly connected to the junction between the first sub-plate 1471 and the second sub-plate 1472, and the other end of the second sub-rib 149 is connected to the second beam side surface 142.

Specifically, the first sub-ribs 148 are disposed between the first beam side surface 141 and the support plate 147. One end of one said first sub-rib 148 is disposed at the junction between the first section 1411 and the second section 1412, and the other end of the first sub-rib is disposed at the junction between the first sub-plate 1471 and the second sub-plate 1472, thereby improving the structural stability of the first beam side surface 141 and the support plate 147.

The second sub-ribs 149 are disposed between the support plate 147 and the second beam side surface 142. One end of one said second sub-rib 149 is disposed at the junction between the first sub-plate 1471 and the second sub-plate 1472, and the other end of the second sub-rib is connected to the middle section 1422 of the second beam side surface 142. Therefore, not only can the connection stability between the support plate 147 and the second beam side surface 142 be improved, but also the expansion and deformation of the middle region of the large surface of the battery cell 20 can be better constrained.

Through the above structure, not only can the connection stability between the first section 1411 and the second section 1412 and between the first sub-plate 1471 and the second sub-plate 1472 be improved, but also the expansion force on the battery cell 20 can be smoothly transmitted to the support plate 147 and the first beam side surface 141 by means of the first sub-rib 148 and the second sub-rib 149, and finally transmitted to the case body 13 by means of the support beam 18.

The first sub-rib 148 is disposed parallel to the first direction a, and the second sub-rib 149 is disposed obliquely relative to the first direction a. In this way, when the battery cell 20 generates an expansion and deformation acting force during cycling, the second sub-rib 149 connected to the second beam side surface 142 may change the direction of the expansion and deformation acting force obtained in the first direction a and then transmit it to the support plate 147, and thus the support plate 147 transmits the expansion and deformation acting force to the first beam side surface 142 in the first direction a by means of the first sub-rib 148, such that the expansion and deformation acting force can be transmitted to the support beam 18, thereby improving the overall rigidity of the limiting beam 14 resisting the deformation in the first direction a, and effectively avoiding excessive expansion and deformation of the battery cell 20 during cycling.

In some embodiments, the limiting beam 14 includes a plurality of first sub-ribs 148 and a plurality of second sub-ribs 149. Two adjacent first sub-ribs 148 are spaced apart from each other and disposed in parallel, and/or at least two adjacent second sub-ribs 149 are spaced apart from each other and inclined in opposite directions relative to the first direction a.

In some embodiments, at least one of the second sub-ribs 149 and the corresponding first sub-rib 148 are jointly connected to the same position of the support plate 147.

Specifically, two adjacent second sub-ribs 149 are spaced apart from each other and inclined in opposite directions relative to the first direction a, and the position at which the second sub-rib 149 is connected to the second beam side surface 142 is disposed in the middle section 1422 of the second beam side surface 142, so as to better support the battery cell 20 by means of the second sub-ribs 149 and constrain the expansion force on the large surface of the battery cell 20.

Further, the two adjacent first sub-ribs 148 are spaced apart from each other and disposed in parallel, such that the force on the support plate 147 can be better transmitted to the first beam side surface 141.

In addition, each second sub-rib 149 and the corresponding first sub-rib 148 are disposed at the same position on the support plate 147, such that the support plate 147 is subjected to a uniform force.

Through the above structure, the overall structural strength of the limiting beam 14 can be improved, so as to better support the battery cell 20 and provide a stable constraint for the expansion force of the battery cell 20.

In some embodiments, the second beam side surface 142 includes an upper section 1421, a middle section 1422, and a lower section 1423 that are evenly divided in a height direction thereof, and the number of the second sub-ribs 149 connected to the middle section 1423 is not less than the number of the second sub-ribs 149 connected to the upper section 1421 or the lower section 123.

In some embodiments, all the second sub-ribs 149 are connected to the middle section 1422.

Specifically, the second sub-rib 149 is the support rib 143. The connecting position between the second sub-rib 149 and the second beam side surface 142 is disposed in the middle section 1422, such that the second sub-rib 149 can better support and constrain the middle region of the large surface of the battery cell 20.

Referring to FIGs. 5, 6, and 7 again, in some embodiments, the limiting beam 14 extends in a second direction b, and the first direction a intersects with the second direction b. The battery 10 includes a plurality of support beams 18, and the plurality of support beams 18 are spaced apart from each other in the second direction b and separately connected between the first beam side surface 141 and the inner wall of the case body 13 in the first direction a.

Specifically, the first direction a is perpendicular to the second direction b. The first direction a is set as the length direction of the case body 13, and the second direction b is set as the width direction of the case body 13.

A plurality of support beams 18 may be provided and are spaced apart from each other in the second direction b. One end of each of the support beams 18 abuts against the first beam side surface 141 of the limiting beam 14 and corresponds to the middle position of the large surface of the battery cell 20, and the other end of the support beam abuts against the inner wall of the case body 13, so as to better transmit the expansion force on the large surface of the battery cell 20 to the case body 13, thereby constraining the expansion on the large surface of the battery cell 20.

Through the above structure, the support beam 18 can be better supported between the limiting beam 14 and the case body 13, and the expansion force on the battery cell 20 can be smoothly transmitted to the case body 13 by means of the support beam 18, thereby providing a better anti-expansion effect.

In addition, the battery 100 includes a plurality of battery cells 20. The plurality of battery cells 20 are arranged into a plurality of rows of battery cells, and each row of battery cells 20 is arranged sequentially in the first direction a. The limiting beams 14 separately abut against two opposite ends of each row of battery cells 20 in the first direction a, and the large surfaces of the battery cells 20 at two outermost ends of each row abut against the second beam side surfaces 142 of the limiting beams 14.

Further, two ends of the fixing member 15 are separately fixed on the limiting beams 14 on two sides; meanwhile, the support beam 18 is supported between the first beam side surface 141 of the limiting beam 14 and the inner wall of the case body 13. Therefore, the battery cells 20 in the accommodating space 16 are constrained and supported.

Based on the same concept as the battery 100 described above, the present application further provides an electric device. The electric device includes the battery 100 as described above, and the battery 100 is configured to provide electric energy for the electric device.

According to one or more embodiments, two limiting beams 14 are separately disposed inside the case body 13 in the first direction a, and then the battery cell 20 is placed in the accommodating space 16 defined, in an enclosing manner, by the limiting beams 14 and the case body 13, and the large surface of the battery cell 20 abuts against the second beam side surface 142 of the limiting beam 14.

Further, the fixing member 15 extends in the first direction a, and two opposite ends of the fixing member are separately connected to the two limiting beams 14. Then, the structural adhesive is applied between the fixing member 15 and the top cover of the battery cell 20, such that the fixing member and the battery cell are connected to each other. A plurality of fixing members 15 may be provided, and the fixing members 15 may be spaced apart from each other in the second direction b and are separately connected to the limiting beams 14.

Then, the support beam 18 extends in the first direction a, and is supported between the limiting beam 14 and the inner wall of the case body 13. When the battery cell 20 undergoes expansion, the limiting beam 14 and the support beam 18 can constrain and support the battery cell 20. On this basis, the fixing member 15 can exert a tension on the two limiting beams 14, and the fixing member 15 and the battery cell 20 are fixed, which can further enhance the constraining force on the battery cell 20. Finally, the expansion force on the battery cell 20 is transmitted to the case body 13 by means of the support beam 18, achieving a good anti-expansion effect.

The technical features of the embodiments described above may be combined in any manner. For brevity, not all possible combinations of the technical features in the above embodiments are described. However, as long as no contradiction exists in the combinations of the technical features, such combinations should be considered to be within the scope of the specification.

The embodiments described above merely represent several implementations of the present application, and the description thereof is specific and detailed, but should not be understood as limiting the patent scope of the present application. It should be noted that various changes and modifications can be made by those of ordinary skill in the art without departing from the concept of the present application, and these changes and modifications shall all fall within the protection scope of the present application. Therefore, the scope of protection of the patent in the present application shall be subject to the appended claims.

## Claims

1. A battery, comprising a battery cell and a case, wherein the case comprises:
a case body;
at least two limiting beams disposed in the case body and spaced apart from each other in a first direction, wherein two adjacent limiting beams and the case body define, in an enclosing manner, an accommodating space for accommodating a battery cell; at least one of the limiting beams comprises a first beam side surface and a second beam side surface disposed opposite to each other in the first direction, the second beam side surface is configured as a vertical plane for abutting against a large surface of the battery cell, the large surface is a surface with a largest surface area in the battery cell, and at least part of the first beam side surface is disposed obliquely toward the second beam side surface; and
a fixing member, extending in the first direction and connected between the two adjacent limiting beams, and configured to limit the two adjacent limiting beams in the first direction.

2. The battery according to claim 1, wherein the fixing member is provided with a connecting surface, and the connecting surface is disposed facing the accommodating space and configured to be connected to the battery cell in the accommodating space.

3. The battery according to claim 2, wherein the case further comprises a connecting member, and the connecting member is disposed between the connecting surface and a top cover of the battery cell and configured to connect the fixing member and the battery cell.

4. The battery according to claim 3, wherein the connecting member comprises an adhesive.

5. The battery according to any one of claims 1 to 4, wherein the fixing member is detachably connected to the limiting beam.

6. The battery according to any one of claims 1 to 5, wherein the case further comprises a support beam, and the support beam is connected between the first beam side surface and an inner wall of the case body in the first direction.

7. The battery according to claim 6, wherein the limiting beam extends in a second direction, and the first direction intersects with the second direction;
the case comprises a plurality of support beams, and the plurality of support beams are spaced apart from each other in the second direction and separately connected between the first beam side surface and the inner wall of the case body in the first direction.

8. The battery according to claim 6 or 7, wherein the first beam side surface comprises a first section and a second section connected to each other, one end of the support beam is connected to the first section in the first direction, and the second section is disposed obliquely toward the second beam side surface;
the first section is disposed coplanar with the second section; or the first section is disposed parallel to the second beam side surface.

9. The battery according to claim 8, wherein an included angle A is formed between the second beam side surface and the second section, and 0° < A ≤ 20°.

10. The battery according to claim 8 or 9, wherein the limiting beam comprises at least one support rib, and the support rib is connected between the first beam side surface and the second beam side surface.

11. The battery according to claim 10, wherein the support rib is disposed obliquely relative to the first direction.

12. The battery according to claim 10 or 11, wherein the limiting beam comprises a plurality of support ribs, and at least two adjacent support ribs are spaced apart from each other and inclined in opposite directions relative to the first direction.

13. The battery according to claim 12, wherein one end, distal to the second beam side surface, of at least one of the support ribs is fixedly connected to a junction between the first section and the second section.

14. The battery according to any one of claims 10 to 13, wherein the second beam side surface comprises an upper section, a middle section, and a lower section that are evenly divided in a height direction thereof; and
a number of the support ribs connected to the middle section is not less than a number of the support ribs connected to the upper section or the lower section.

15. The battery according to claim 14, wherein one end of all the support ribs is connected to the middle section.

16. The battery according to any one of claims 8 to 15, wherein the limiting beam further comprises a top surface and a bottom surface; and
the top surface and the bottom surface are separately connected to two ends of the first beam side surface and the second beam side surface, so as to surround and define an internal cavity of the limiting beam.

17. The battery according to claim 16, wherein the limiting beam comprises a support plate; and
the support plate is connected between the top surface and the bottom surface to separate the internal cavity of the limiting beam into at least two sub-cavities.

18. The battery according to claim 17, wherein the limiting beam comprises at least one first sub-rib and at least one second sub-rib, the first sub-rib is connected between the first beam side surface and the support plate, and the second sub-rib is connected between the support plate and the second beam side surface.

19. The battery according to claim 18, wherein the support plate comprises a first sub-plate and a second sub-plate connected to each other, and the second sub-plate is disposed obliquely toward the second beam side surface;
the first sub-plate is disposed coplanar with the second sub-plate; or the first sub-plate is disposed parallel to the second beam side surface.

20. The battery according to claim 19, wherein one end of one said first sub-rib is fixedly connected to the junction between the first section and the second section, and the other end of the first sub-rib is fixedly connected to a junction between the first sub-plate and the second sub-plate; and
one end of one said second sub-rib is fixedly connected to the junction between the first sub-plate and the second sub-plate, and the other end of the second sub-rib is connected to the second beam side surface.

21. The battery according to any one of claims 18 to 20, wherein the first sub-rib is disposed parallel to the first direction, and the second sub-rib is disposed obliquely relative to the first direction.

22. The battery according to any one of claims 18 to 21, wherein the limiting beam comprises a plurality of first sub-ribs and a plurality of second sub-ribs.

23. The battery according to claim 22, wherein two adjacent first sub-ribs are spaced apart from each other and disposed in parallel.

24. The battery according to claim 22 or 23, wherein at least two adjacent second sub-ribs are spaced apart from each other and inclined in opposite directions relative to the first direction.

25. The battery according to any one of claims 18 to 24, wherein at least one of the second sub-ribs and the corresponding first sub-rib are jointly connected to a same position of the support plate.

26. The battery according to any one of claims 18 to 25, wherein the second beam side surface comprises an upper section, a middle section, and a lower section that are evenly divided in a height direction thereof, and a number of the second sub-ribs connected to the middle section is not less than a number of the second sub-ribs connected to the upper section or the lower section.

27. The battery according to claim 26, wherein all the second sub-ribs are connected to the middle section.

28. An electric device, comprising the battery according to any one of claims 1 to 27, wherein the battery is configured to provide electric energy for the electric device.
